# EUROPÄISCHE PATENTSCHRIFT

(11) **EP 0 380 908 B1**
(45) Veröffentlichungstag und Bekanntmachung des Hinweises auf die Patenterteilung: **20.07.1994**
(21) Anmeldenummer: 90100091.9
(22) Anmeldetag: 03.01.1990
(51) Int. Cl.: F16B 5/12

(54) **Grundplatte aus Kunststoff**
Base plate made of plastic material
Plaque de base en matière plastique

(30) Priorität: 02.02.1989 DE 3903124
(43) Veröffentlichungstag der Anmeldung: 08.08.1990
(73) Patentinhaber: TRW United-Carr GmbH & Co. KG, D-67677 Enkenbach-Alsenborn (DE)
(72) Erfinder: Kraus, Willibald, D-6718 Grünstadt (DE)
(74) Vertreter: Schieschke, Klaus, Dipl.-Ing.

(56) Entgegenhaltungen:
- EP-A- 0 219 217
- DE-A- 3 418 894
- GB-A- 2 043 761
- US-A- 3 399 435
- US-A- 4 433 930

## Beschreibung

Die Erfindung bezieht sich auf eine Grundplatte aus Kunststoff mit einer, mit einem Klebemittel versehenen Fläche und mit mindestens einem, auf der gegenüberliegenden Seite angeordneten Kupplungselement zur Verbindung mit einer Befestigungsvorrichtung.

Als Stand der Technik ist bereits eine derartige Konstruktion bekannt (US-A-4 433 930), bei welcher die Wölbung dann auftritt, wenn beim Anziehen einer Mutter die Grundplatte infolge des dünnen Trägers eine unerwünschte Verwerfung erfährt, da der Gewindebolzen in die Öffnung eines weiteren Teils hineingezogen wird.

Um diese unerwünschte Deformation, nämlich die Wölbung, der Grundplatte zu vermeiden, wird bei diesem bekannten Stand der Technik vorgeschlagen, den mittleren Bereich der Platte mit einer Verrippung zu versehen, um im Zentrum des Gewindebolzens einen formstabilen Bereich zu schaffen.

Als Stand der Technik sind weiterhin Grundplatten bekannt, welche insbesondere in der Automobilindustrie angewendet werden, bei denen die mit Klebemittel versehene Fläche eben ausgebildet ist, um möglichst eine gute Anlage an einem Träger zu schaffen (DE-A-35 44 217, US-A- 3 606 437, DE-A-29 30 850, GB-A 2 012 860, FR-A 2 542 829).

Eine weitere Möglichkeit besteht nach dem bekannten Stand der Technik darin, daß die zu befestigende Zierleiste einen magnetisierbaren Werkstoff enthält, welcher vor dem Aufkleben der Zierleiste auf die Grundfläche magnetisiert wird (DE-A-2 807 331 ). Hierbei ist eine Befestigungsfläche mit einer Aussparung zur Aufnahme eines Klebemittels vorgesehen.

Allen diesen bekannten Konstruktionen ist gemeinsam, daß die mit Klebemittel zu versehene Fläche möglichst eben ausgebildet ist oder daß eine Wölbung vermieden werden soll. Nachteilig ist hierbei jedoch, daß die Haltewirkung dann ungenügend wird, wenn der Träger beispielsweise uneben ausgebildet ist.

Demgegenüber besteht die Aufgabe der vorliegenden Erfindung darin, eine Grundplatte zu schaffen, welche auch dann über ein Klebemittel funktionssicher an einem Träger zu befestigen ist, wenn dieser Träger unebene Flächen aufweist.

Diese Aufgabe wird erfindungsgemäß dadurch gelöst, daß die mit Klebemittel versehene Fläche der Grundplatte im unverspannten und ungebundenen Zustand konkav gewölbt ausgebildet ist und daß der tiefste Punkt der Wölbung im Bereich unterhalb des Kupplungselements liegt.

Die vorliegende Erfindung löst sich damit von dem Vorurteil, welches gemäß der erstgenannten Druckschrift angegeben ist, nämlich, daß eine gewölbte Fläche in jedem Fall zu vermeiden ist, will man zwei Teile über eine Klebeverbindung miteinander zusammenfügen.

Erfindungsgemäß wird ein neuer Weg insofern beschritten, als die Grundplatte von vornherein eine durchgehend konkav gewölbte Fläche aufweist. Hierdurch ergibt sich die Möglichkeit, daß beispielsweise über ein Hilfswerkzeug ein gleichmäßiger Anpreßdruck auf die zu beklebende Fläche aufgebracht wird, wobei der Druck von außen nach innen gleichmäßig erfolgt und somit erreicht wird, auch auf unebenen Trägerflächen eine optimale Ausnützung der Klebefläche zu erreichen.

Die Grundplatte kann hierbei jede beliebige Konfiguration aufweisen, beispielsweise rund, rechteckig oder asymmetrisch ausgebildet sein. Durch die konkave Ausführungsform ist es in jedem Fall hierbei möglich, beispielsweise über ein Hilfswerkzeug einen gleichmäßigen Anpreßdruck auf die zu beklebende Fläche zu erreichen, da der Druck von außen nach innen gleichmäßig erfolgt und somit auch die Möglichkeit besteht, auf unebenen Trägerflächen eine optimale Ausnützung der Klebefläche zu erreichen. Hierbei kann infolge der konkaven Wölbung die Grundplatte in sich flexibel sein, wodurch ebenfalls eine gute Anpassung an unebene Trägerflächen erreicht wird. Konkav und flexibel führt vorteilhafterweise zu einem geringeren Anpreßdruck mit hoher Festigkeit

In weiterer Ausgestaltung der Erfindung kann die Grundplatte quadratisch ausgebildet sein, wobei die mit Klebemittel versehene Fläche zumindest über einen Teilbereich aufgerauht oder hochglanzpoliert ausgebildet ist, je nach Klebemittel. Weiterhin besteht erfindungsgemäß die Möglichkeit, daß das Kupplungselement zentrisch auf der Grundplatte angeordnet ist. Hierbei kann in weiterer Ausgestaltung der Erfindung das Kupplungselement aus einem zentrischen Hohlzylinder und zwei, in gleichem Abstand dazu angeordneten, einander gegenüberliegenden, schalenförmigen Halteteilen mit Rastnasen bestehen. Die Rastnasen können jeweils gegen den Hohlzylinder gerichtet sein, wobei der Hohlzylinder im unteren Bereich eine quer zu den Halteteilen verlaufende, durchgehende Ausnehmung aufweist.

In weiterer Ausgestaltung der Erfindung kann der Hohlzylinder im oberen Bereich mit einer konischen Schulter versehen sein. Hierdurch ist eine weitere Verriegelung mit einer Befestigungsvorrichtung möglich. Darüberhinaus kann der Hohlzylinder am Innen- oder Außenumfang axial verlaufende Stege aufweisen, welche die Aufgabe haben, zur Arretierung mit einer Befestigungsvorrichtung und zu einem rastbaren Verdrehschutz beizutragen.

Die Erfindung wird nachfolgend anhand von in der Zeichnung dargestellten Ausführungsbeispielen näher beschrieben. In der Zeichnung zeigen:
- Fig. 1: eine Seitenansicht der Grundplatte mit Kupplungselement;
- Fig. 2: eine Draufsicht auf die Grundplatte nach Fig. 1;
- Fig. 3: einen Mittelschnitt durch die Grundplatte nach Fig. 2;
- Fig. 4: eine perspektivische Ansicht der Grundplatte nach einer anderen Ausführungsform;
- Fig. 5: eine perspektivische Ansicht einer anderen Ausführungsform eines Hohlzylinders des Kupplungselements.

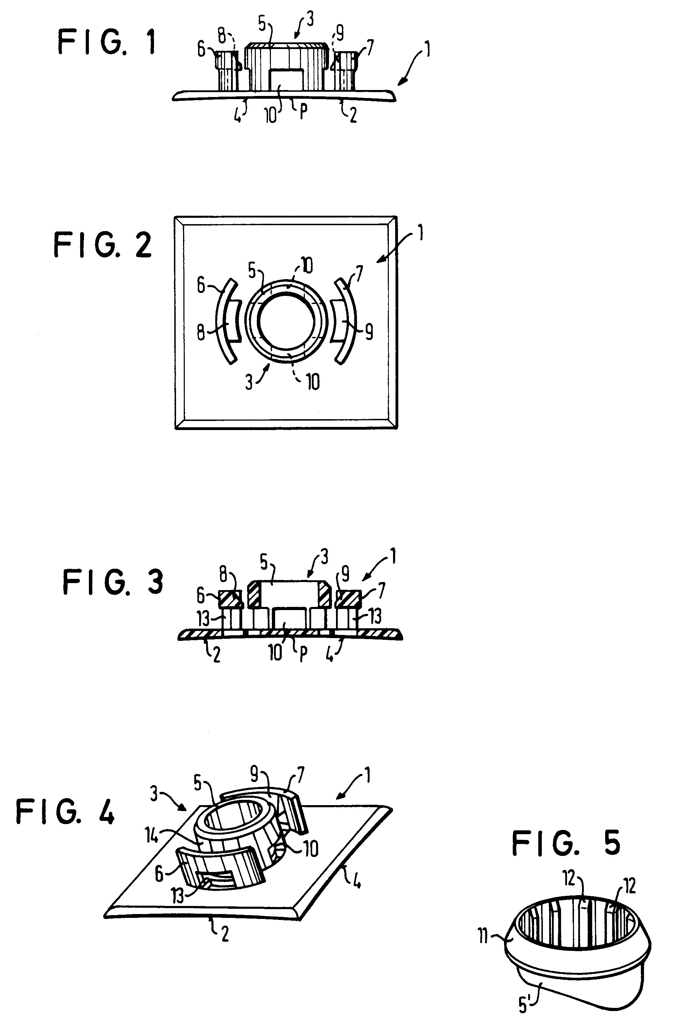

Nach Fig. 1 weist eine aus Kunststoff bestehende Grundplatte 1 eine an einem Träger zu befestigende Fläche 2 und, dieser gegenüberliegend, ein Kupplungselement 3 zur Verbindung mit einer nicht näher dargestellten Befestigungsvorrichtung, beispielsweise einem Kabelband oder einem anderen Halteelement auf. Die mit Klebemittel versehene Fläche 2 der Grundplatte 1 ist erfindungsgemäß konkav gewölbt ausgebildet, wobei der tiefste Punkt P der Wölbung 4 im Bereich unterhalb des Kupplungselements 3 liegt.

Aus Fig. 2 ist ersichtlich, daß die Grundplatte 1 quadratisch ausgebildet ist, wobei die Möglichkeit besteht, daß die mit Klebemittel versehene Fläche zumindest über einen Teilbereich aufgerauht bzw. hochglanzpoliert ausgebildet ist, um eine Erhöhung der Haltewirkung zu erzielen. Weiterhin ist aus Fig. 1 und 2 ersichtlich, daß das Kupplungselement 3 zentrisch auf der Grundplatte 1 angeordnet ist.

Aus den Figuren 1 bis 4 geht weiterhin hervor, daß das Kupplungselement 3 aus einem zentrischen Hohlzylinder 5 und zwei, in gleichem Abstand dazu angeordneten, einander gegenüberliegenden, schalenförmigen Halteteilen 6 besteht. Jedes dieser Halteteile ist mit einer Rastnase 8 bzw. 9 versehen, wobei aus Fig. 3 hervorgeht, daß diese Rastnasen 8 und 9 jeweils gegen den Hohlzylinder 5 gerichtet sind.

An dem Außenrand des Hohlzylinders 5 sind bei der Ausführungsform nach Fig. 4 axiale Stege 14 ausgebildet. Unterhalb dieser Rastnasen 8 und 9 können sich Aussparungen 13 in den Halteteilen 6 und 7 befinden. Darüberhinaus weist der Hohlzylinder 5 im unteren Bereich eine quer zu den Halteteilen 6, 7 verlaufende, durchgehende Ausnehmung 10 auf. Diese Ausnehmungen 10 bzw. 13 ermöglichen bei einem Reparaturfall, bei welchem beispielsweise die Halteteile 6 und 7 nicht mehr verwendbar sind, ein Kabelband durchzuziehen und damit ein Rohr oder ein Kabel wieder zu befestigen, und zwar je nach dessen Lage.

Im oberen Bereich weist nach Fig. 3 und 4 der Hohlzylinder eine Abschrägung auf, um ein zapfenförmiges Befestigungselement, welches sich beispielsweise im Inneren des Hohlzylinders einlagert, funktionsrichtig eingreifen zu lassen.

Bei der Ausführungsform nach Fig. 5 ist der Hohlzylinder 5′ so ausgebildet, daß er im oberen Bereich eine konische Schulter 11 besitzt, welche zur Verbesserung der Halterung an einer Befestigungsvorrichtung beiträgt. Um einen Verdrehschutz und eine weitere Verbesserung der Arretierung zu erzielen, kann der Innenumfang des Hohlzylinders 5′ axial verlaufende Stege 12 aufweisen.

Durch die konkav gewölbte Form der mit Klebemittel zu versehenden Fläche der Grundplatte 1 und durch die besondere Gestaltung des Kupplungselements 3 wird eine Halteeinheit geschaffen, welche auch bei unebenen Trägerflächen einwandfrei eine Befestigungsvorrichtung über das auf der Fläche 2 aufgetragene Klebemittel gewährleistet.

## Patentansprüche

1. Grundplatte aus Kunststoff, mit einer mit einem Klebemittel versehenen, an einem Träger zu befestigenden Fläche und mit mindestens einem, auf der gegenüberliegenden Seite angeordneten Kupplungselement zur Verbindung mit einer Befestigungsvorrichtung, dadurch gekennzeichnet, daß die mit Klebemittel versehene Fläche (2) der Grundplatte (1) im unverspannten und unverbundenen Zustand konkav gewölbt ausgebildet ist und daß der tiefste Punkt (P) der Wölbung (4) im Bereich unterhalb des Kupplungselements (3) liegt.

2. Grundplatte nach Anspruch 1, gekennzeichnet durch quadratische Ausbildung der Grundplatte (1).

3. Grundplatte nach Anspruch 1 und 2, dadurch gekennzeichnet, daß die mit Klebemittel versehene Fläche (2) zumindest über einen Teilbereich aufgerauht ausgebildet ist.

4. Grundplatte nach Anspruch 1 und 2, dadurch gekennzeichnet, daß die mit Klebemittel versehene Fläche (2) zumindest über einen Teilbereich hochglanzpoliert ausgebildet ist.

5. Grundplatte nach einem der vorhergehenden Ansprüche, dadurch gekennzeichnet, daß das Kupplungselement (3) zentrisch auf der Grundplatte (1) angeordnet ist.

6. Grundplatte nach einem der vorhergehenden Ansprüche, dadurch gekennzeichnet, daß das Kupplungselement (3) aus einem zentrischen Hohlzylinder (5) und zwei, im gleichen Abstand dazu angeordneten, einander gegenüberliegenden schalenförmigen Halteteilen (6, 7) mit Rastnasen (8, 9) besteht.

7. Grundplatte nach Anspruch 6, dadurch gekennzeichnet, daß die Rastnasen (8, 9) jeweils gegen den Hohlzylinder (5) gerichtet sind.

8. Grundplatte nach Anspruch 6 und 7, dadurch gekennzeichnet, daß der Hohlzylinder (5) im unteren Bereich eine quer zu den Halteteilen (6, 7) verlaufende, durchgehende Ausnehmung (10) aufweist.

9. Grundplatte nach Anspruch 6 bis 8, dadurch gekennzeichnet, daß der Hohlzylinder (5) im oberen Bereich mit einer konischen Schulter (11) versehen ist.

10. Grundplatte nach einem der vorhergehenden Ansprüche, dadurch gekennzeichnet, daß der Hohlzylinder (5, 5′) am Innen- oder Außenumfang axial verlaufende Stege (12, 14) aufweist.

## Claims

1. Base plate made of plastic with a surface which is provided with an adhesive and is to be fastened to a support and with at least one coupling element arranged on the opposite side for joining to a fastening device, characterized in that the surface (2), provided with adhesive, of the base plate (1) is, in the undistorted and unjoined state, designed so as to be curved in a concave manner and in that the lowest point (P) of the curvature (4) is located in the region below the coupling element (3).

2. Base plate according to Claim 1, characterized by a square design of the base plate (1).

3. Base plate according to Claims 1 and 2, characterized in that the surface (2) provided with adhesive is designed roughened at least over a partial region.

4. Base plate according to Claims 1 and 2, characterized in that the surface (2) provided with adhesive is designed polished to a high gloss at least over a partial region.

5. Base plate according to one of the preceding claims, characterized in that the coupling element (3) is arranged centrally on the base plate (1).

6. Base plate according to one of the preceding claims, characterized in that the coupling element (3) comprises a central hollow cylinder (5) and two dish-shaped holding parts (6, 7), arranged at equal distances from the cylinder and opposite one another, with detent lugs (8, 9).

7. Base plate according to Claim 6, characterized in that the detent lugs (8, 9) are each directed towards the hollow cylinder (5).

8. Base plate according to Claims 6 and 7, characterized in that the hollow cylinder (5) has in the lower region a continuous recess (10) running transversely to the holding parts (6, 7).

9. Base plate according to Claims 6 to 8, characterized in that the hollow cylinder (5) is provided with a conical shoulder (11) in the upper region.

10. Base plate according to one of the preceding claims, characterized in that the hollow cylinder (5, 5') has axially running webs (12, 14) on the interior or exterior circumference.

## Revendications

1. Plaque de base en matière plastique comportant une face dotée d'une substance adhésive à fixer sur un support et au moins un élément de couplage disposé sur le côté opposé pour la liaison avec un dispositif de fixation, caractérisée en ce que la face (2) dotée de la substance adhésive de la plaque de base (1) à l'état non déformé et non assemblé est de conception concave et en ce que le point le plus bas (P) de la concavité (4) se situe dans la zone au-dessous de l'élément de couplage (3).

2. Plaque de base selon la revendication 1, caractérisée par la construction carrée de la plaque de base (1).

3. Plaque de base selon la revendication 1 ou 2, caractérisée en ce que la face (2) dotée de la substance adhésive présente au moins sur une zone partielle une formation de rugosité.

4. Plaque de base selon la revendication 1 et 2, caractérisée en ce que la face (2) dotée de la substance adhésive présente au moins sur une portion partielle un aspect de poli spéculaire.

5. Plaque de base selon l'une des revendications précédentes, caractérisée en ce que l'élément de couplage (3) est disposé centralement sur la plaque de base (1).

6. Plaque de base selon l'une des revendications précédentes, caractérisée en ce que l'élément de couplage (3) consiste en un cylindre creux central (5) et en deux parties de retenue (6, 7) en forme de coupelle disposées à une certaine distance et opposées entre elles avec des talons de butée (8, 9).

7. Plaque de base selon la revendication 6, caractérisée en ce que les talons de butée (8, 9) sont respectivement orientés sur le cylindre creux (5).

8. Plaque de base selon la revendication 6 ou 7, caractérisée en ce que le cylindre creux (5) présente dans la zone inférieure un évidement (10) continu, s'étendant transversalement aux parties de maintien (6, 7).

9. Plaque de base selon les revendications 6 à 8, caractérisée en ce que dans la zone supérieure, le cylindre creux (5) est muni d'un épaulement conique (11).

10. Plaque de base selon l'une des revendications précédentes, caractérisée en ce que le cylindre creux (5, 5') présente sur la périphérie interne ou externe des entretoises (12, 14) s'étendant axialement.
